# EUROPÄISCHE PATENTANMELDUNG

(11) **EP 1 139 266 A1**
(43) Veröffentlichungstag der Anmeldung: **04.10.2001**
(21) Anmeldenummer: 00106916.0
(22) Anmeldetag: 31.03.2000
(51) Int. Cl.: G06F 19/00, A63F 13/00, A63B 71/06

(54) **Verfahren zur Ermittlung einer Personenrangfolge**

(71) Anmelder: Rathje, Karl-Otto, 48703 Stadtlohn (DE)
(72) Erfinder: Rathje, Karl-Otto, 48703 Stadtlohn (DE)
(74) Vertreter: Brandt, Detlef (DE)

(57) **Zusammenfassung**

Die Erfindung betrifft ein Verfahren zur Ermittlung einer Personenrangfolge. Um ein Verfahren zu schaffen, das auf eine Anzahl der zu berücksichtigenden Personen nicht beschränkt ist, einer verfahrensbeteiligten Person jederzeit die Einsicht in die ermittelte Rangfolge ermöglicht, wird mit der Erfindung ein Verfahren vorgeschlagen, bei dem zur Ermittlung einer Personenrangfolge innerhalb eines definierten Personenkreises anhand vorgebbarer Vergleichswerte in einem ersten Verfahrensschritt Personenstammdaten elektronisch erfaßt, registriert und mittels einer zentralen Recheneinheit gespeichert werden, wobei einer jeden registrierten Person als zukünftige Zugangsberechtigung ein eindeutiger Identifizierungscode automatisch zugewiesen wird, in einem zweiten Verfahrensschritt Vergleichswerte unter Zugrundelegung des jeweiligen Identifizierungscodes an die zentrale Recheneinheit übergeben und dort wieder abrufbar gespeichert werden, in einem dritten Verfahrensschritt die an die zentrale Recheneinheit übergebenen Vergleichswerte nach Ablauf eines vorgebbaren Zeitintervalls einer Vergleichsoperation automatisch unterzogen und in Form einer Rangliste sortiert gespeichert werden und in einem vierten Verfahrensschritt eine Zuordnung der registrierten Personen zu den sortiert abgespeicherten Vergleichswerten unter Verwendung des Identifizierungscodes erfolgt.

## Beschreibung

Die Erfindung betrifft ein Verfahren zur Ermittlung einer Personenrangfolge innerhalb eines definierten Personenkreises anhand vorgebbarer Vergleichswerte.

Derartige Verfahren sind aus dem Stand der Technik bekannt und werden insbesondere zur Statistikerstellung eingesetzt. Zu diesem Zweck werden in der Regel personenbezogene Vergleichswerte miteinander verglichen. So könnte beispielsweise innerhalb eines definierten Personenkreises unter Verwendung der Körpergröße als Vergleichswert eine Personenrangfolge ermittelt werden, die Auskunft darüber gibt, welche der beteiligten Personen die größte und welche die kleinste Person ist. Ein weiteres Beispiel der Personenrangfolge-Ermittlung ist die Bestimmung eines Siegers als Ergebnis eines Wettkampfs.

Insbesondere im Hinblick auf wettkämpferische Auseinandersetzungen besteht ein großes Bestreben aller Beteiligten darin, sich zur Ermittlung eines Siegers miteinander in den erzielten Leistungen zu vergleichen. Voraussetzung hierfür ist ein definierter Personenkreis, d.h. die Ermittlung einer Rangfolge und damit eines Siegers erfolgt nur unter Berücksichtigung der von den am Wettkampf beteiligten Personen erzielten Leistungen. Kriterium für die Zugehörigkeit zum am Wettkampf teilnehmenden Personenkreis ist die Wettkampf-Zugangsberechtigung. So bleiben diejenigen Personen, die nicht über eine entsprechende Wettkampf-Zugangsberechtigung verfügen, vom jeweiligen Wettkampf ausgeschlossen.

Insbesondere unter Zugrundelegung eines großen Teilnehmerfeldes, d.h. einer Vielzahl berechtigter Wettkampfteilnehmer, besteht ein fortwährender Bedarf daran, Wettstreitigkeiten oder -kämpfe durchzuführen; ebenso wie sich als Teilnehmer mit einer großer Vielzahl anderer Wettkampfteilnehmer zu messen. Unabhängig von der Anzahl der teilnehmenden Wettstreiter ist es hierbei für jeden Teilnehmer von Interesse jederzeit Einblick in die ermittelte Rangliste zu nehmen und seinen in dieser Rangliste eingenommenen Platz in Erfahrung zu bringen.

Von dem vorgenannten ausgehend liegt der Erfindung die **Aufgabe** zugrunde, ein Verfahren zur Ermittlung einer Personenrangfolge anzugeben, das auf eine Anzahl der zu berücksichtigenden Personen nicht beschränkt ist und einer verfahrensbeteiligten Person jederzeit die Einsicht in die ermittelte Rangfolge ermöglicht.

**Gelöst** wird diese Aufgabe durch ein Verfahren zur Ermittlung einer Personenrangfolge innerhalb eines definierten Personenkreises anhand vorgebbarer Vergleichswerte, bei dem in einem ersten Verfahrensschritt Personenstammdaten elektronisch erfaßt, registriert und mittels einer zentralen Recheneinheit gespeichert werden, wobei einer jeden registrierten Person als zukünftige Zugangsberechtigung ein eindeutiger Identifizierungscode automatisch zugewiesen wird, in einem zweiten Verfahrensschritt personenbezogene Vergleichswerte unter Zugrundelegung des jeweiligen Identifizierungscodes an die zentrale Recheneinheit übergeben und dort wieder abrufbar gespeichert werden, in einem dritten Verfahrensschritt die an die zentrale Recheneinheit übergebenen Vergleichswerte nach Ablauf eines vorgebbaren Zeitintervalls einer Vergleichsoperation automatisch unterzogen und in Form einer Rangliste sortiert gespeichert werden und in einem vierten Verfahrensschritt eine Zuordnung der registrierten Personen zu den sortiert abgespeicherten Vergleichswerten unter Verwendung des Identifizierungscodes erfolgt.

Das erfindungsgemäße Verfahren ermöglicht erstmals einen vergleichenden Wettstreit zwischen Personen eines in der Teilnehmerzahl nicht beschränkten Personenkreises. Erforderlich ist lediglich, daß jede Person, die am Wettstreit teilzunehmen wünscht, sich unter Zuzug einer Identifizierung registrieren läßt. Sobald eine Registrierung abgeschlossen und eine Identifizierung möglich ist, obliegt es dem jeweiligen Wettstreitteilnehmer entsprechende Vergleichswerte vorzugeben. Hierbei können als Vergleichswerte alle Arten von Angaben benutzt werden, die dazu geeignet sind, im Rahmen eines Wettstreits oder -kampfs als Vergleichskriterium zur Ermittlung einer Rangfolge verwendet zu werden. Anhand der vorgegebenen Vergleichswerte wird sodann unter Zuhilfenahme einer zentralen Recheneinheit eine Personenrangfolge ermittelt.

Im einzelnen wird das erfindungsgemäße Verfahren wie folgt durchgeführt: In einem ersten Verfahrensschritt werden sämtliche, teilzunehmen wünschenden Personen anhand von Personenstammdaten elektronisch erfaßt, registriert und mittels einer zentralen Recheneinheit gespeichert. Als Personenstammdaten können Adressinformationen, wie beispielsweise Name der Person, Wohnort oder Telefonnummer, verwendet werden. Nicht erforderlich ist, daß die Personenstammdaten eine eindeutige Zuordnung ermöglichen. Sie dienen lediglich der jeweiligen Person zur Identifizierung der eigenen Rangstellung in der zu ermittelnden Personenrangfolge. Im Zuge der Personenstammdatenregistrierung wird einer jeden registrierten Person automatisch ein eindeutiger Identifizierungscode zugewiesen. Dieser Identifizierungscode dient der zukünftigen Zugangsberechtigung und weist Vergleichswerte einer bestimmten Person eindeutig zu. Auf diese Weise können Fehlzuweisungen oder Verwechslungen vermieden werden. Der Identifizierungscode sollte hierbei im Sinne einer ausschließlichen Zugangsberechtigung und zur Abwehr eines Mißbrauchs durch andere, nicht berechtigte Personen geheimgehalten werden. Beispielsweise kann der Identifizierungscode aus einer Zahlen - und/oder Buchstabenfolge bestehen.

In einem zweiten Verfahrensschritt werden Vergleichswerte unter Zugrundelegung des jeweiligen Identifizierungscodes an die zentrale Recheneinheit übergeben und dort gespeichert. Gemäß einem vorteilhaften Vorschlag der Erfindung wird als zentrale Recheneinheit ein Internet-/WAP-Server verwendet. In diesem Fall ist insbesondere die Übertragung der Vergleichswerte via E-Mail von besonderem Vorteil. Aber auch andere Kommunikationswege, wie beispielsweise Telefon, Fax oder auf postalischem Wege, sind gleichfalls denkbar. In jedem Fall ist jedoch die Übergabe von Vergleichswerten nur unter Angabe des Identifikationscodes der jeweiligen Person möglich. Auf diese Weise kann eine Zuordnung der übergebenen Vergleichswerte zu den jeweiligen Personen jederzeit sichergestellt werden. Eine Verwechslung ist ausgeschlossen. Die übergebenen Vergleichswerte werden von der zentralen Recheneinheit gespeichert und sind jederzeit wieder abrufbar. Hierbei kann ein Wiederabrufen der gespeicherten Daten entweder eine Zugangsvoraussetzung, beispielsweise den schon vorhandenen Identifikationscode, voraussetzen oder aber durch jeden Teilnehmer möglich sein.

Die an die zentrale Recheneinheit übergebenen Vergleichswerte werden in einem dritten Verfahrensschritt nach Ablauf eines vorgebbaren Zeitintervalls einer Vergleichsoperation automatisch unterzogen und in Form einer Rangliste sortiert gespeichert. Als Vergleichsoperation kann beispielsweise eine alphanumerische Sortierung durchgeführt werden. Das Ergebnis einer solchen Sortierung ist eine Rangliste, die der durchgeführten Vergleichsoperation entsprechend einer Auflistung sämtlicher an die zentrale Recheneinheit übergebenen Vergleichswerte aufweist. Das Zeitintervall, nach dessen Ablauf die übergebenen Vergleichswerte einer Vergleichsoperation unterzogen werden, ist erfindungsgemäß vorgebbar. Beispielsweise kann das Zeitintervall derart bemessen sein, daß nach Übergabe eines neuen, bei der Ermittlung der Rangfolge noch nicht berücksichtigten Vergleichswerts, eine Vergleichsoperation durchgeführt und der neu übergebene Vergleichswert sofortige Berücksichtigung bei der Ermittlung einer Rangfolge findet. Vorteil bei dieser Vorgehensweise ist, daß sämtliche Teilnehmer unverzüglich über die Übergabe eines neues Vergleichswerts und dessen Einordnung in eine bereits bestehende Rangfolge informiert werden. Denkbar ist auch die Staffelung von Zeitintervallen in der Art, daß zunächst mehrere Vergleichswerte gesammelt und im Zuge einer Vergleichsoperation zur Ermittlung einer Rangfolge verwendet werden. Als mögliche Zeitintervalle können beispielsweise Stunden-, Tagintervalle oder dergleichen eingesetzt werden. Der Vorteil einer derartigen Zeitintervallvorgabe liegt darin, daß die aufzuwendende Rechnerleistung geringer und eine ständige Aktualisierung der eingehenden Vergleichswerte nicht erforderlich ist.

In einem vierten Verfahrensschritt erfolgt sodann eine Zuordnung der registrierten Personen zu den sortiert abgespeicherten Vergleichswerten unter Verwendung des Identifizierungscodes. In diesem Verfahrensschritt erfolgt mithin die Zuordnung der gemäß durchgeführter Vergleichsoperation aufgelisteten Vergleichswerte zu den jeweiligen Personen. Diese Auflistung kann sodann von jedem Teilnehmer eingesehen werden, wobei sich jeder Teilnehmer aufgrund seiner Personenstammdaten identifizieren und in der Rangliste wiederfinden kann. Hierbei enthält die Rangliste zum einen den erreichten Rangplatz bzw. die erreichten Rangplätze sowie den Vergleichswert bzw. die Vergleichswerte die den Rangplatz bzw. die Rangplätze rechtfertigen. Ein jeder Teilnehmer kann somit der Rangliste seine Stellung innerhalb der Rangliste und den Vergleichswert aufgrund dessen er diese Vergleichsstellung erreicht hat einsehen und zudem ergründen, welche Rangplätze andere Teilnehmer mit welchen Vergleichswerten erreicht haben.

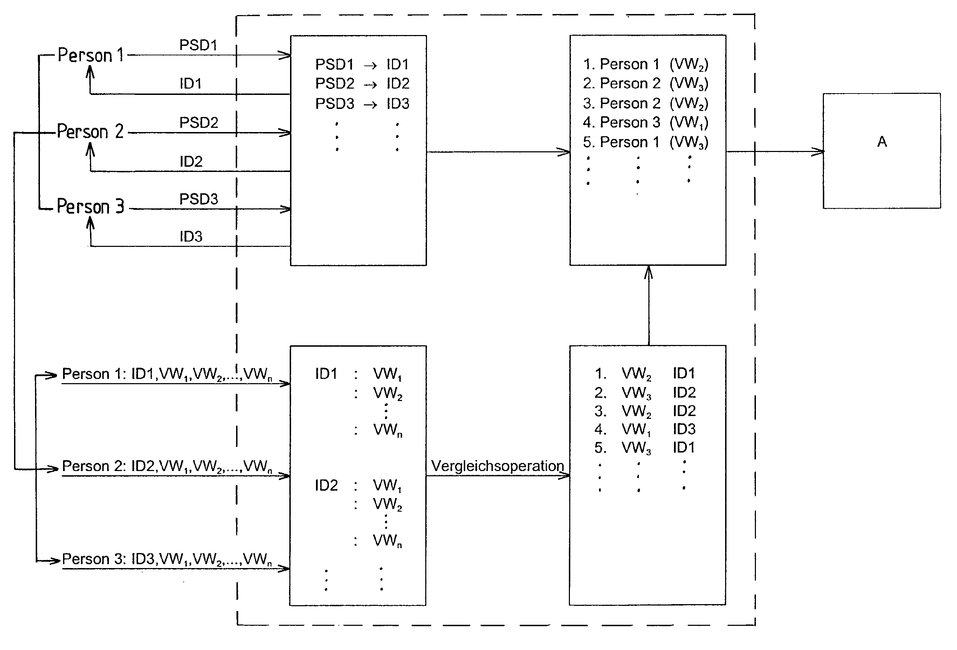

Weitere Vorteile und Merkmale der Erfindung ergeben sich aus der nachfolgenden Beschreibung anhand der Figur. Diese zeigt in schematischer Darstellung den Ablauf des erfindungsgemäßen Verfahrens.

Beispielhaft wird bei der Durchführung des erfindungsgemäßen Verfahrens gemäß der Figur von einem aus drei Personen bestehenden Personenkreis ausgegangen. Die hier gewählte Anzahl von drei Personen ist beliebig und in keiner Weise beschränkend.

In einem ersten Verfahrensschritt wird jede einzelne Person unter Angabe jeweiliger Personenstammdaten elektronisch erfaßt, registriert und mittels einer zentralen Recheneinheit gespeichert. Die Personenstammdaten einer jeden Person sind hierbei in der Figur durch einen jeweils mit PSD gekennzeichneten Pfeil dargestellt, wobei der Person 1 die Personenstammdaten PSD1, der Person 2 die Personenstammdaten PSD2 und der Person 3 die Personenstammdaten PSD3 zugeordnet sind. Einer jeden so registrierten Person wird sodann als zukünftige Zugangsberechtigung ein eindeutiger Identifizierungscode automatisch zugewiesen. In der Figur ist dies durch die mit ID gekennzeichneten Pfeile symbolisiert. Hierbei wird der Person 1 der Identifizierungscode ID1, der Person 2 der Identifizerungscode ID2 und der Person 3 der Identifizierungscode ID3 zugewiesen. Die in der Figur symbolisch durch eine unterbrochene Strichlinie dargestellte Recheneinheit kann nunmehr dazu verwendet werden, unter Angabe eines eindeutigen Identifizierungscodes diesen den jeweils zugewiesenen Personenstammdaten zuzuordnen.

Unter Nutzung des jeweiligen Identifizierungscodes übergeben nun die jeweiligen Personen 1, 2 und 3 in einem zweiten Verfahrensschritt Vergleichswerte VW an die zentrale Recheneinheit. Unter Zugrundelegung des jeweiligen Identifizierungscodes ID werden die übergebenen Vergleichswerte VW personenbezogen von der zentralen Recheneinheit wieder abrufbar gespeichert. Unabhängig von der Anzahl der eingegebenen Vergleichswerte VW₁ bis VWₙ können diese unter jeweiliger Angabe des Identifizierungscodes gespeichert werden.

Die an die zentrale Recheneinheit übergebenen Vergleichswerte werden sodann nach Ablauf eines vorgebbaren Zeitintervalls einer Vergleichsoperation automatisch unterzogen. Dies ist in der Figur symbolisch durch den mit "Vergleichsoperation" gekennzeichneten Pfeil dargestellt. Als Ergebnis werden die Vergleichswerte sortiert und in Form einer Rangliste abgespeichert. Beispielhaft ist in der Figur dargestellt, daß nach erfolgter Vergleichsoperation auf Platz 1 der Rangliste Vergleichswert VW₂, zugeordnet dem Identifikationscode ID1, steht. Auf Platz 2 der Rangliste ist unter Zugrundelegung des Identifikationscodes ID2 der Vergleichswert VW₃ wiederzufinden.

In einem abschließenden vierten Verfahrensschritt erfolgt die Zuordnung der registrierten Personen zu den sortiert abgespeicherten Vergleichswerten unter Verwendung des Identifizierungscodes. Dies ist ebenfalls beispielhaft in der Figur dargestellt. Danach hält beispielsweise Person 1 sowohl Rang 1 als auch Rang 5 der Rangliste inne, wobei Person 1 aufgrund des Vergleichswerts VW₂ Position 1 und aufgrund des Vergleichswerts VW₃ Rang 5 besetzt. Nach einer erfolgten Auswertung wird die ermittelte Rangliste zur Ansicht aller beteiligten Personen zur Anzeige gebracht. Symbolisch ist dies durch das mit "A" gekennzeichnete Kästchen dargestellt.

Alternativ zu der vorbeschriebenen Auswertung der an die zentrale Rechnereinheit übergebenen Vergleichswerte kann gleichfalls vorgesehen sein, daß die mit der Vergleichsoperation erstellte Rangliste einen Identifizierungscode jeweils nur einmal ausweist. Die Vergleichsoperation kann dabei derart gestaltet durchgeführt werden, daß für den Fall, daß mehrere Vergleichswerte ein und demselben Identifizierungscode zugeordnet werden können, nur der in der Rangliste am höchsten stehende Vergleichswert verwendet wird. Auf diese Weise kann sichergestellt werden, daß eine Person, die unter Nutzung Ihres Identifizierungscodes mehrere unterschiedliche Vergleichswerte eingibt, nicht mehrere unterschiedliche Rangplätze zugewiesen bekommt, sondern daß ausschließlich derjenige Vergleichswert herangezogen wird, der in der Rangliste zuoberst angeordnet ist. Mithin wird eine Person, unabhängig von der Anzahl der eingegebenen Vergleichswerte, nur einmal in der Rangliste aufgeführt.

Zur weiteren Erläuterung wird nachfolgend ein weiteres Ausführungsbeispiel beschrieben, welches in keinster Weise beschränkend ist. Insbesondere die verwendeten Vergleichswerte als auch die zugrundegelegten Vergleichsoperationen sind variabel. Ausgangspunkt für die Anwendung des erfindungsgemäßen Verfahrens ist die Ermittlung des besten "Sony-Playstation" Rennfahrers und die Vergabe des "Speed-Masters-Cup". Jeder kann mitmachen, gefahren wird auf der Sony-Playstation im Gran Turismo Modus. Es ist lediglich erforderlich, daß sich jeder Teilnehmer unter Angabe personenbezogener Stammdaten, wie beispielsweise Vor- und Zuname oder Postleitzahl, elektronisch erfassen und registrieren läßt. Dies geschieht vorzugsweise per E-Mail. Die Personenstammdaten werden unter Verwendung eines Internet-Servers gespeichert. Nach erfolgter Registrierung erhält jeder Teilnehmer automatisch einen eindeutigen Identifizierungscode zugewiesen, der sich vorzugsweise in Form eines Nummerncodes darstellen läßt.

Jeder registrierte Teilnehmer kann sodann seine auf der Sony-Playstation gefahrenen Rennrunden an die zentrale Recheneinheit übergeben. In vorteilhafter Weise erfolgt dies wiederum per E-Mail, wobei auch telefonische Durchsagen und Fax-Mitteilungen möglich sind. Im 24-Stunden-Rhythmus werden die von den einzelnen Teilnehmern angegebenen Rundenzeiten automatisch von der zentralen Recheneinheit miteinander verglichen und derart in eine Rangliste abgespeichert, daß die kürzeste Renn-Rundenzeit Rang 1 und die längste Renn-Rundenzeit den letzten Rang einnimmt. Eine Zuordnung der registrierten Personen zu den abgespeicherten Renn-Rundenzeiten erfolgt unter Verwendung des Identifizierungscodes. Jeder Teilnehmer kann entweder über E-Mail oder via Internet die momentan gültige Rangliste einsehen. Hier ist natürlich bei einer Verkürzung des Auswertezeitintervalls eine mehrfache Aktualisierung der Rangliste pro Tag möglich. Zudem wird den Teilnehmern die Möglichkeit gegeben, entweder eine sämtliche Teilnehmer umfassende Rangliste oder eine nach Postleitzahlengebieten aufgegliederte Rangliste einzusehen. Es lassen sich auf diese Weise Tages-, Wochen- und Monatssieger sowie regionenbezogen Landessieger- und Bundessieger ermitteln. Hierbei kann das für die Eingabe von Vergleichswerten insgesamt zur Verfügung stehende Zeitintervall auf einen allen Teilnehmern bekannten Zeitraum, beispielsweise 3 Monaten, begrenzt sein. Nach Ablauf dieser 3 Monate kann ein neues Vergleichsrennen gestartet werden.

Um zu vermeiden, daß unrichtige Vegleichswerte, d.h. falsch angegebene Rennzeiten an die zentrale Recheneinheit von den teilnehmenden Personen übergeben werden, werden stichprobenartig die Zeiten der gefahrenen Rennrunden überprüft. Zu diesem Zweck können einzelne Teilnehmer dazu aufgefordert werden, zur Überprüfung der Rennrunden ein Photo vom Bildschirm, die Memory-Card oder den Dex-Drive einzusenden. Anhand dieser Daten kann sodann die Richtigkeit der an die zentrale Recheneinheit übertragenen Rennrundenzeiten überprüft werden.

### Bezugszeichenliste

- PSD1: Personenstammdaten von Person 1
- PSD2: Personenstammdaten von Person 2
- PSD3: Personenstammdaten von Person 3
- ID1: Identifizierungscode Person 1
- ID2: Identifizierungscode Person 2
- ID3: Identifizierungscode Person 3
- VW₁ ...VWₙ: Vergleichswerte 1 bis n
- A: Anzeige

## Patentansprüche

1. Verfahren zur Ermittlung einer Personenrangfolge innerhalb eines definierten Personenkreises anhand vorgebbarer Vergleichswerte, bei dem in einem ersten Verfahrensschritt Personenstammdaten elektronisch erfaßt, registriert und mittels einer zentralen Recheneinheit gespeichert werden, wobei einer jeden registrierten Person als zukünftige Zugangsberechtigung ein eindeutiger Identifizierungscode automatisch zugewiesen wird, in einem zweiten Verfahrensschritt Vergleichswerte unter Zugrundelegung des jeweiligen Identifizierungscodes an die zentrale Recheneinheit übergeben und dort wieder abrufbar gespeichert werden, in einem dritten Verfahrensschritt die an die zentrale Recheneinheit übergebenen Vergleichswerte nach Ablauf eines vorgebbaren Zeitintervalls einer Vergleichsoperation automatisch unterzogen und in Form einer Rangliste sortiert gespeichert werden und in einem vierten Verfahrensschritt eine Zuordnung der registrierten Personen zu den sortiert abgespeicherten Vergleichswerten unter Verwendung des Identifizierungscodes erfolgt.

2. Verfahren nach Anspruch 1, dazu gekennzeichnet, daß als zentrale Recheneinheit ein Internet- /WAP - Server verwendet wird.

3. Verfahren nach einem der Ansprüche 1 bis 2, **dadurch gekennzeichnet, daß** als Personenstammdaten Adressen verwendet werden.

4. Verfahren nach einem der Ansprüche 1 bis 3, **dadurch gekennzeichnet, daß** der Identifizierungscode aus einer Zahlen- und/oder Buchstabenfolge besteht.

5. Verfahren nach einem der Ansprüche 1 bis 4, **dadurch gekennzeichnet, daß** als Vergleichsoperation eine alphanumerische Sortierung durchgeführt wird.
